# FASCICULE DE BREVET EUROPEEN

(11) **EP 2 334 602 B1**
(45) Date de publication et mention de la délivrance du brevet: **10.12.2014**
(21) Numéro de dépôt: 08875614.3
(22) Date de dépôt: 02.10.2008
(51) Int. Cl.: F01K 15/02, C02F 1/22, F01B 9/02, F01B 9/06, F01C 13/04, F01K 3/02, F01K 23/06, F01K 23/12, F01K 23/14, F01L 7/02, F02B 19/02, F02B 75/32, F02G 5/02, F25B 27/02, F28D 3/02, F28F 13/00, F01K 21/04

(54) **SYSTEME HYBRIDE MOTORISE**
HYBRIDMOTORSYSTEM
HYBRID MOTOR SYSTEM

(43) Date de publication de la demande: 22.06.2011
(60) Demande divisionnaire: 14169912.4
(73) Titulaire: BAUDINO, Etienne, F-13100 Aix en Provence (FR)
(72) Inventeur: BAUDINO, Etienne, F-13100 Aix en Provence (FR)
(74) Mandataire: Roman, Alexis
(86) Numéro de dépôt international: PCT/FR2008/001381
(87) Numéro de publication internationale: WO 2010/037912

(56) Documents cités:
- WO-A1-2008/109174
- FR-A- 2 588 645
- GB-A- 2 000 224

## Description

La présente invention a pour objet un système hybride motorisé ainsi qu'un véhicule motorisé équipé d'un tel système.

Elle concerne le domaine technique des systèmes motorisés comportant plus d'une machine motrice et en particulier ceux comportant un moteur à combustion interne et un moteur à combustion externe, ledit moteur à combustion externe utilisant la chaleur des gaz de combustion dudit moteur à combustion interne pour fonctionner.

On connaît les moteurs à combustion interne du type comprenant des pistons aptes à se déplacer dans des cylindres, lesdits pistons étant animés par la combustion et l'expansion d'un mélange d'air et de carburant. Ces moteurs sont largement utilisés dans le domaine automobile et équipent la grande majorité des véhicules automobiles.

Toutefois, dans les moteurs à combustion interne, une partie importante de la chaleur motrice est perdue par les gaz de combustion, ce qui nuit au rendement global et génère des nuisances environnementales.

On connaît les moteurs à combustion externe du type comprenant des pistons aptes à se déplacer dans des cylindres, lesdits pistons étant animés par la détente et l'expansion d'un fluide actif. Ce type de moteur présente l'avantage d'être peu polluant. De tels moteurs sont par exemple décrits dans le brevet EP 0.244.435 du même inventeur ou encore dans la demande de brevet

En général, le fluide actif est de l'air atmosphérique chauffé et mis sous pression en amont du moteur à combustion externe. Dans le brevet EP 0.244.435, le fluide est chauffé et mit sous pression à l'aide d'un bouilleur et d'un échangeur thermique apte à absorber, stocker et restituer la chaleur évacuée à l'échappement des cylindres. Bien qu'efficace, le couple mécanique généré par ce moteur est relativement faible par rapport à celui obtenu avec le moteur à combustion interne.

Dans la demande de brevet US2005/0257523 (PROESCHEL), l'air atmosphérique est chauffé et mit sous pression par l'intermédiaire d'un échangeur thermique apte à absorber, stocker et restituer la chaleur issue de la combustion de l'air évacué à l'échappement des cylindres mélangé avec une masse de carburant au niveau d'un brûleur. Cette solution est complexe à mettre en oeuvre et génère une pollution plus importante que les moteurs à combustion externe classiques.

On connaît également par le brevet EP 0.713.561 (VEN et al) et par le document brevet GB 2.000.224 (MARTIN), un système hybride motorisé comportant un moteur à combustion interne et un moteur à combustion externe du type décrit dans EP 0.244.435. Le brevet EP 0.713.561 enseigne notamment d'utiliser le fluide de refroidissement du moteur à combustion interne de manière à chauffer le fluide actif du moteur à combustion externe. Cette solution n'est pas totalement satisfaisante car elle nécessite des échangeurs de chaleur de grande surface, massifs et encombrants. De plus, l'utilisation de cycles fluidiques fermés utilisant des fluides diphasiques différents complémentaires limite le fonctionnement du moteur à explosion interne - et donc le rendement global du système et la diminution des nuisances environnementales - à l'exploitation de la chaleur perdue par le fluide de refroidissement du moteur à combustion interne.

*Le document brevet* WO2008/109174 (HARMON*) divulgue un système hybride motorisé du même type que celui décrit dans le brevet* EP 0.713.561 *précité et plus particulièrement, un système hybride conforme au préambule de la revendication n°1.*

Face aux inconvénients de l'art antérieur et notamment ceux du système hybride motorisé décrit dans le brevet EP 0.713.561 (VEN et al), le problème technique principal que vise à résoudre l'invention est d'avoir un système hybride motorisé permettant d'utiliser de manière plus efficace l'énergie résiduelle des moteurs à combustion interne.

Un autre objectif de l'invention est de proposer un système hybride motorisé capable de générer un couple mécanique au moins aussi important que le couple d'un moteur à combustion interne, mais avec un meilleur rendement global et une diminution significative des nuisances environnementales.

Encore un autre objectif de l'invention est de proposer un système hybride motorisé de conception simple et facile à mettre en oeuvre.

L'invention a encore pour objectif de proposer un véhicule automobile fiable, économique, ayant une consommation de carburant diminuée par rapport aux véhicules automobiles classiques et qui génère moins de pollution.

La solution proposée par l'invention est un système hybride motorisé selon la revendication indépendante 1 comportant entre autres :
- un moteur à combustion interne à au moins trois cylindres montés parallèlement entre eux dans un même plan du type comprenant des pistons aptes à se déplacer dans lesdits cylindres, lesdits pistons étant animés par la combustion et l'expansion d'un mélange d'air et de carburant distribués de façon classique par clapets et soupapes
- un moteur à combustion externe à au moins trois cylindres montés parallèlement entre eux dans un même plan du type comprenant des pistons aptes à se déplacer dans lesdits cylindres, lesdits pistons combinés et coordonnés aux pistons dudit moteur à combustion interne étant animés successivement par la détente et l'expansion d'un fluide actif pénétrant successivement dans lesdits cylindres, cette combinaison d'au moins trois cylindres permettant une évacuation à flux constant et sans heurt du fluide actif étant précisé que la distribution dudit moteur à combustion externe fonctionne sans clapets ni soupapes permettant en outre d'éviter toute condensation du fluide actif et de fait un démarrage autonome du système hybride motorisé indépendamment du moteur a combustion interne a partir d'une simple source de chaleur extérieure ou un fluide pressurisé tel que l'air ;
Le démarrage étant assuré ledit système est remarquable en ce que les gaz de combustion évacués dudit moteur à combustion interne sont alors utilisés de manière a chauffer ledit fluide actif qui s'élève en pression

Cette solution technique permet de récupérer une partie de l'énergie thermique évacuée par les gaz de combustion du moteur à combustion interne pour la transformer en énergie mécanique au niveau du moteur à combustion externe.

Selon une caractéristique avantageuse ne formant pas partie de l'invention permettant de simplifier la conception du système hybride motorisé, un échangeur thermique tel un caloduc est disposé extérieurement au moteur à combustion externe, ledit échangeur étant en contact intime d'une part avec les conduits d'évacuation des gaz de combustion issus du moteur à combustion interne et d'autre avec des moyens canalisant le fluide actif destiné à animer les pistons dudit moteur à combustion externe, ledit échangeur étant configuré de manière à ce que lesdits gaz de combustion et le fluide actif circulant en sens inverse échangent de la chaleur entre eux optimisant le rendement. Selon une autre caractéristique avantageuse de l'invention le moteur à combustion interne et le moteur à combustion externe dispose d'une même capacité étanche contenant un fluide de refroidissement entourant les parois des cylindres de sorte que la détente du fluide actif dans les au moins trois cylindres du moteur à combustion externe est réalisée avec absorption de chaleur évacuant ainsi pour partie la chaleur dudit fluide de refroidissement issue des parois des dits cylindres formant le moteur a combustion interne et le moteur à combustion externe ce qui a pour premier avantage de diminuer la chaleur normalement évacuée par le radiateur du seul moteur à combustion interne

Selon une autre caractéristique avantageuse ne formant pas partie de l'invention favorisant les échanges entre les gaz de combustion et le fluide actif, l'échangeur thermique est formé d'une enceinte en contact intime avec un ou plusieurs conduits d'évacuation des gaz de combustion, ledit échangeur intégrant une capacité chaleur desdits gaz de combustion. Et préférentiellement, la capacité est formée par un treillis ou une laine métallique configurés de manière à laisser le fluide actif circuler dans l'enceinte de l'échangeur thermique tout en augmentant la surface d'échange thermique.

Selon encore une autre caractéristique avantageuse ne formant pas partie de l'invention permettant d'augmenter la quantité de chaleur emmagasinée par la capacité de l'échangeur thermique, cette dernière est agencée avec une source d'énergie thermique extérieure.

Selon encore une autre caractéristique avantageuse ne formant pas partie de l'invention destinée à augmenter le rendement de l'échangeur thermique, ce dernier est associé à un dispositif d'injection de carburant de manière à ce que le fluide actif traversant ledit échangeur soit mélangé à une masse de carburant, ce dernier étant destiné à s'enflammer dans ledit échangeur sous l'effet de la chaleur issue des gaz de combustion.

Selon encore une autre caractéristique avantageuse ne formant pas partie de l'invention permettant d'améliorer le rendement du moteur à combustion externe, une partie des gaz de combustion évacués du moteur à combustion interne est combinée au fluide actif destiné à animer les pistons dudit moteur à combustion externe.

Selon encore une autre caractéristique avantageuse ne formant pas partie de l'invention permettant d'optimiser la captation de chaleur issue des gaz de combustion, le fluide actif est de l'air, une masse maîtrisée de vapeur d'eau étant mélangée à cet air avant d'être chauffé et mis sous pression par au moins lesdits gaz de combustion. Et préférentiellement, une capacité, disposée en aval du moteur à combustion externe, comporte des moyens pour séparer la vapeur d'eau de l'air en sortie des cylindres du moteur à combustion externe, ladite vapeur d'eau ainsi récupérée étant réintroduite a la demande dans le cycle animant ledit moteur à combustion externe, ladite vapeur d'eau pouvant selon les besoins etre issue directement sous forme liquide du radiateur de refroidissement du système hybride motorisé commun au moteur a combustion interne et au moteur à combustion externe et réinjectée a l'aide d'un compresseur directement dans la capacité extérieure formant bouilleur dans lequel il élève sa température et de vaporise en élevant sa pression sous l'effet de la chaleur des gaz de combustion après avoir été préalablement préchauffée au contact de la capacité commune de refroidissement englobant le moteur a combustion interne et le moteur a combustion externe, la vapeur repoussant successivement dans leur cylindre respectif chacun des trois pistons dans les formant le moteur a combustion externe , cette combinaison de'au moins cylindres étant nécessaire pour éviter toute condensation qui nuirait au fonctionnement et permettrait pas un démarrage automatique indépendamment du moteur a combustion interne, une simple source de chaleur alimentant la capcité formant le bouilleur, telle l'énergie solaire, étant suffisante pour vaporiser l'eau laquelle vapeur d'eau détendue en sortie du moteur a combustion externe retourne au radiateur commun de retroussement ou elle se condense pour un nouveau cycle

Selon encore une caractéristique avantageuse de l'invention permettant d'améliorer le rendement du moteur à combustion interne, les pistons dudit moteur à combustion interne et les pistons du moteur à combustion externe sont agencés de manière à ce que l'énergie résultant de la détente du fluide actif dans les cylindres dudit moteur à combustion externe agisse sur lesdits pistons dudit moteur à combustion interne pendant les phases de compression et d'échappement.

Selon encore une autre caractéristique avantageuse ne formant pas partie de l'invention permettant d'améliorer le rendement global du système, les gaz de combustion évacués du moteur à combustion interne et/ou le fluide actif évacué du moteur à combustion externe sont canalisés vers un volant de détente commun libérant leur énergie résiduelle.

Selon encore une autre caractéristique avantageuse ne formant pas partie de l'invention permettant de simplifier la conception du moteur à combustion externe, le dispositif de distribution de ce dernier est formé par un premier tube tournant perforé configuré de manière à assurer l'admission du fluide actif dans les cylindres dudit moteur, et par un second tube tournant perforé configuré de manière à assurer l'échappement dudit fluide hors desdits cylindres. Et préférentiellement, pour que la position des tubes tournants soit synchronisée avec les phases du moteur à combustion externe, lesdits tubes tournants sont entraînés en rotation par le vilebrequin relié aux pistons dudit moteur, par l'intermédiaire de moyens de transmission configurés de manière à ce que pour un tour dudit vilebrequin, les phases d'admission et d'échappement du fluide actif dans les cylindres dudit moteur soient réalisées successivement.

Dans une variante de réalisation ne formant pas partie de l'invention, le dispositif de distribution du moteur à combustion externe est formé par un boisseau configuré de manière à assurer l'admission et l'échappement du fluide actif dans les cylindres dudit moteur.

Préférentiellement, pour que la position du boisseau soit synchronisée avec les phases du moteur à combustion externe, ledit boisseau est entraîné en rotation par le vilebrequin relié aux pistons dudit moteur, par l'intermédiaire de moyens de transmission configurés de manière à ce que pour un tour dudit. vilebrequin, les phases d'admission et d'échappement du fluide actif dans les cylindres dudit moteur soient réalisées successivement.

Et selon une caractéristique avantageuse ne formant pas partie de l'invention permettant d'optimiser la compacité de ce dispositif de distribution, le boisseau est formé par un tube externe à l'intérieur duquel est fixé un tube interne concentrique, de diamètre plus petit, lesdits tubes comportant des échancrures configurées de manière à permettre la circulation dudit fluide actif entre lesdits tubes et les cylindres du moteur à combustion externe lors de la rotation dudit boisseau.

Les pistons du moteur à combustion interne et les pistons du moteur à combustion externe sont agencés avec un arbre de force tournant, ledit arbre étant équipé de cames configurées de manière à agir simultanément sur des galets placés à l'intérieur desdits pistons dudit moteur à combustion interne, et des galets placés à l'intérieur desdits pistons dudit moteur à combustion externe, les courses desdits pistons étant liées au profil et à la position angulaire desdites cames. Cet agencement permet un déplacement chronologique des pistons combiné au cycle de distribution et un mouvement de rotation à couple constant.

Un autre aspect de l'invention concerne un véhicule automobile intégrant le système hybride conforme aux caractéristiques précédentes.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une représentation schématique d'un premier mode de réalisation du système hybride motorisé objet de l'invention,
- la figure 2 est une représentation schématique du système hybride motorisé objet de l'invention dans une variante de réalisation,
- les figures 3a et 3b sont des vues en coupe représentant schématiquement un cylindre du moteur à combustion externe, respectivement en phase d'admission et en phase d'échappement, ledit cylindre étant équipé d'un dispositif de distribution,
- la figure 4a est une vue en coupe représentant schématiquement les cylindres du moteur à combustion externe équipés d'un autre dispositif de distribution
- la figure 4b est une vue en coupe représentant schématiquement les cylindres de la figures 4a en inversion de phase,
- les figures 5a, 5b, 5c et 5d sont des vues en coupe agrandie, respectivement selon A-A, B-B, C-C et D-D des figures 4a et 4b, seul le dispositif de distribution étant représenté par souci de clarté,
- les figures 6a et 6b sont des vues en coupe représentant schématiquement un mode d'attelage des pistons des moteurs du système hybride motorisé sur un vilebrequin commun, ne formant pas partie de l'invention, lesdits pistons étant représentés successivement en phase ascendante et/ou en phase descendante.
- les figures 7a et 7b sont des vues en coupe représentant schématiquement le mode d'attelage des pistons des moteurs du système hybride motorisé objet de l'invention sur un vilebrequin commun, lesdits pistons étant représentés successivement en phase ascendante et/ou en phase descendante.

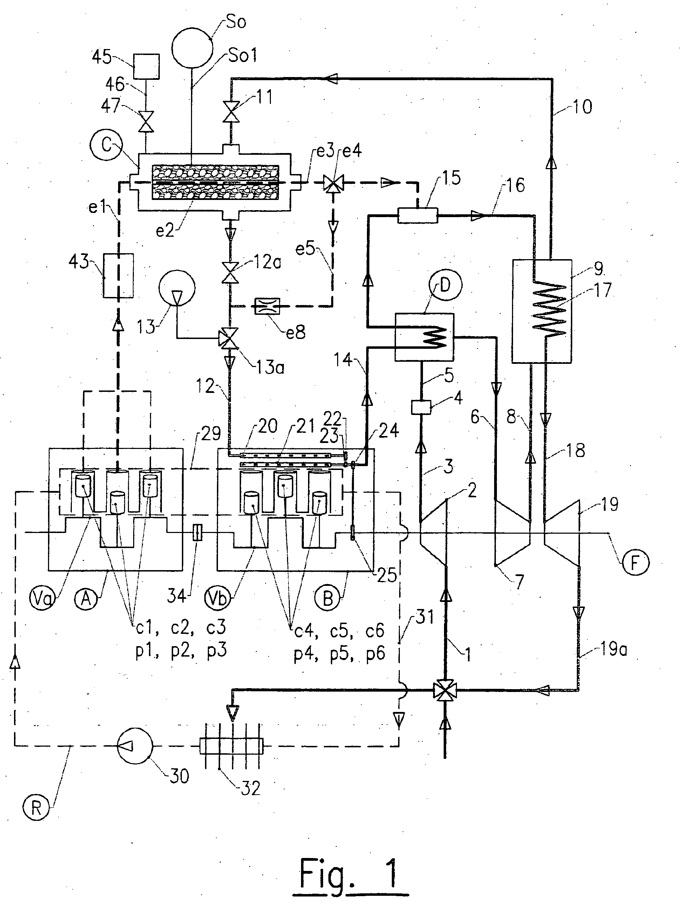

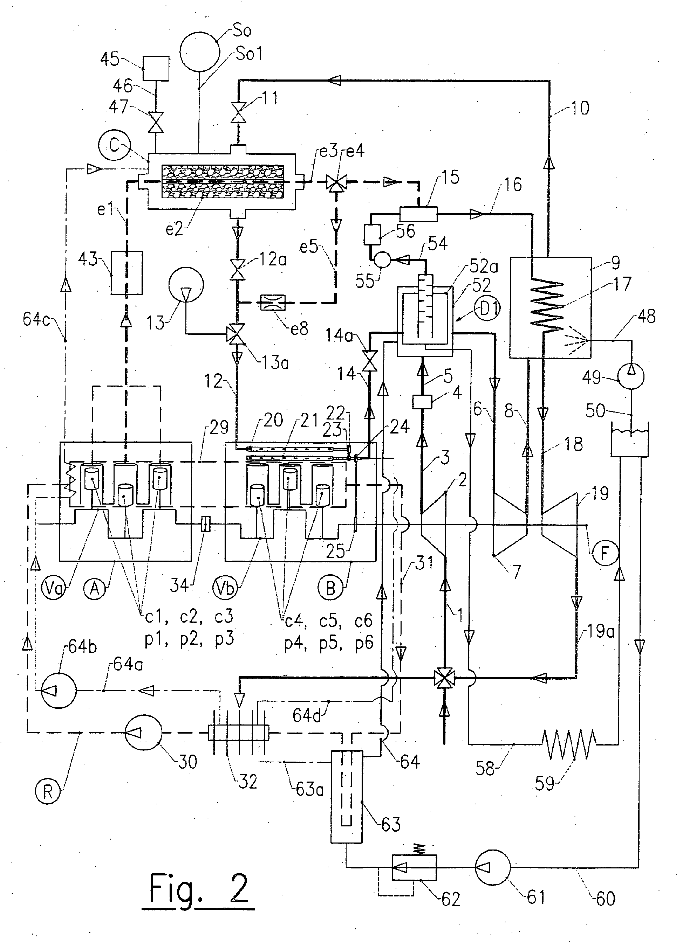

En se rapportant aux figures 1 et 2, le système hybride objet de l'invention comporte :
- un moteur à combustion interne A du type comprenant des pistons p1, p2, p3 aptes à se déplacer dans des cylindres c1, c2, c3, lesdits pistons étant animés par la combustion et l'expansion d'un mélange d'air et de carburant,
- un moteur à combustion externe B du type comprenant des pistons p4, p5, p6 aptes à se déplacer dans des cylindres c4, c5, c6, lesdits pistons étant animés par la détente et l'expansion d'un fluide actif comprimé dans lesdits cylindres.

D'une manière préférée, le moteur à combustion interne A est animé par un cycle moteur à quatre temps (admission/compression/détente/échappement) alors que le moteur à combustion externe B est animé par un cycle moteur à deux temps (détente/échappement). Le moteur à combustion interne A peut-être un moteur à essence classique ou préférentiellement un moteur diesel.

On utilisera au moins trois pistons par moteur pour un fonctionnement harmonieux. Toutefois, un nombre supérieur ou inférieur de pistons peut être employé.

Les pistons p1, p2, p3 du moteur à combustion interne A et les pistons p4, p5, p6 du moteur à combustion externe B peuvent être reliés à un vilebrequin commun. De cette manière, les moteurs A et B agissent conjointement sur ce vilebrequin et fonctionnent avec des vitesses de rotation et des puissances identiques pour produire un couple mécanique à toutes fins utiles et notamment pour la propulsion d'un véhicule automobile. Dans ce cas, le vilebrequin est relié aux moyens permettant la propulsion du véhicule tels la boîte à vitesse ou l'arbre de transmission.

Dans une variante de réalisation représentée sur les figures 1 et 2, les pistons p1, p2, p3 du moteur à combustion interne A et les pistons p4, p5, p6 du moteur à combustion externe B sont reliés à des vilebrequins distincts, respectivement Va et Vb. Un moyen d'accouplement 34 est avantageusement prévu entre les deux vilebrequins Va et Vb de manière à pouvoir les solidariser ou les différencier selon le besoin :
- en fonctionnement solidarisé, les moteurs A et B produisent conjointement de la force exploitable simultanément sur des arbres de force reliés à chacun des vilebrequins ou sur un arbre de force commun, par exemple agencé avec les moyens de propulsion d'un véhicule automobile,
- en fonctionnement différencié, les moteurs A et B fonctionnent chacun à des vitesses, des puissances et des couples différents adaptés aux besoins, la force produite par chacun desdits moteurs pouvant être exploitée séparément.

Le moteur à combustion interne A peut fonctionner à des vitesses de rotation et des couples variables correspondants aux besoins de la propulsion d'un véhicule automobile. Dans ce cas, les pistons p1, p2, p3 du moteur à combustion interne A agissent prioritairement sur le vilebrequin Va, ce dernier pouvant être relié aux moyens permettant la propulsion du véhicule telle la boite à vitesse ou l'arbre de transmission.

Le moteur à combustion externe B peut fonctionner à couple constant pour entraîner, selon la demande, soit un compresseur soit un alternateur, avec une vitesse de rotation adaptée à la production de froid ou d'électricité. Cet agencement procure un coefficient de performance optimisé, en évitant de fait les problèmes liés à l'insertion de réducteurs ou autres composants intermédiaires pénalisants. Dans ce cas, les pistons p4, p5, p6 du moteur à combustion externe B agissent prioritairement sur le vilebrequin Vb, ce dernier pouvant être relié à un compresseur frigorifique ou à un générateur d'électricité.

Le compresseur frigorifique agencé avec le moteur à combustion externe B peut par exemple servir à produire du froid négatif à toutes fins utiles et notamment pour la conservation de denrées comestibles, de boissons, etc. Le système hybride motorisé objet de l'invention sera alors préférentiellement installé dans un véhicule frigorifique dont le système de réfrigération est agencé avec ce compresseur frigorifique.

Le compresseur frigorifique agencé avec le moteur à combustion externe B pourra également servir à produire du froid négatif pour le dessalement d'eau saline, et notamment d'eau de mer, par congélation. En effet, la congélation de l'eau saline permet de séparer, par effet de cristallisation, le sel qui remonte en surface. L'eau douce se retrouve congelée en-dessous, formant un parpaing de glace exploitable à toutes fins utiles. En pratique, à une température négative d'environ -25°C, l'eau de mer se congèle, le sel se cristallisant en surface.

On peut alors prévoir, à titre d'exemple non limitatif, d'installer le système hybride motorisé dans une installation de dessalement d'eau saline, et notamment d'eau de mer. Le système hybride motorisé sera préférentiellement installé dans un véhicule équipé d'une telle installation embarquée. Cette installation est équipée de contenants de type valise ou conteneur, d'une capacité d'environ 20 L chacun, lesdits contenants étant agencés avec le compresseur frigorifique. Avantageusement, l'eau saline est préalablement refroidie à environ 5°C avant d'être disposée dans les contenants. Sur une distance déterminée et selon la puissance du véhicule et le volume d'eau saline à traiter, le moteur à combustion externe B est capable de fournir une énergie permettant de faire fonctionner le compresseur frigorifique de manière à ce que l'eau saline soit refroidie de 5°C à la température de congélation. Les parpaings de glace ainsi formés sont ensuite traités de manière à séparer l'eau douce congelée du sel cristallisé, par exemple en éliminant la couche dudit sel cristallisé. L'eau douce récupérée pourra être ensuite utilisable à toutes fins utiles notamment sous forme de parpaing, coulis ou eau fondue. Cette solution technique est particulièrement utile pour potabiliser l'eau de mer dans le but d'apporter une solution immédiate dans l'alimentation en eau potable au coeur des zones à traiter difficiles d'accès.

Le générateur d'électricité employé avec le moteur à combustion externe B peut être combiné avec au moins une batterie formant préférentiellement une capacité dynamique inertielle d'accumulation et de restitution de l'électricité générée. Cette batterie pourra être amovible de façon à permettre la distribution différée de l'énergie électrique dans des zones isolées. On utilisera préférentiellement une batterie de type inertiel comportant au moins un volant formant rotor évoluant sous vide et à grande vitesse et des stators périphériques solidaires du carter porteur étanche. Dans une variante de réalisation, le générateur d'électricité couplé au vilebrequin Vb est réversible agissant à toutes fins utiles et à la demande sur le moteur A et/ou B.

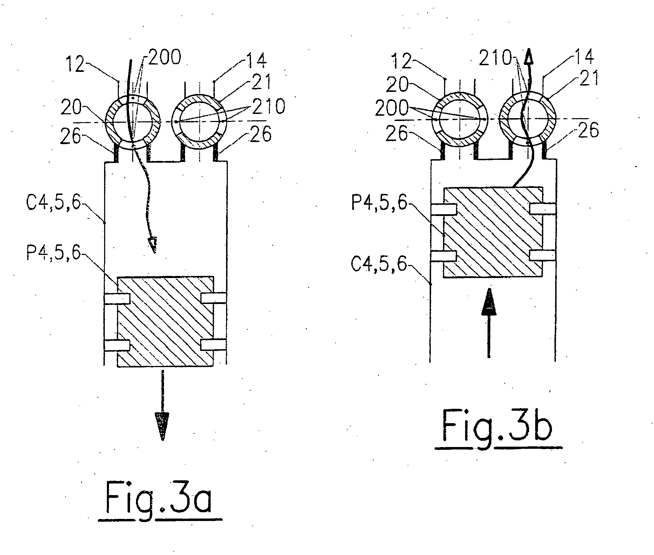

Selon une caractéristique avantageuse ne formant pas partie de l'invention représentée sur les figures annexées et plus particulièrement aux figures 3a et 3b, le moteur à combustion externe B fonctionne sans clapet, ni soupape, ni système d'allumage. Les phases d'admission et d'échappement du fluide actif dans le moteur à combustion externe B sont réalisées à l'aide d'un dispositif de distribution comportant deux tubes tournants 20 et 21. Ce dispositif de distribution est par exemple décrit en détail dans le brevet EP 0.244.435. Ce mode de distribution chronologique permet notamment de limiter les effets de condensation trop rapide dans le cas d'un fonctionnement en air humide.

Les tubes tournants 20 et 21 sont disposés au niveau de la culasse du moteur à combustion externe B. Ils sont positionnés parallèlement entre eux et sont montés mobiles en rotation autour d'un axe parallèle à l'axe de rotation du vilebrequin associé au moteur à combustion externe B. Les tubes tournants 20 et 21 sont préférentiellement reliés l'un à l'autre par des moyens de transmission 22, 23 de type roues dentées, engrenages, ou tout autre moyen équivalent.

Pour que la position des tubes tournants 20, 21 soit synchronisée avec les phases du moteur à combustion externe B, lesdits tubes sont entraînés en rotation par le vilebrequin relié aux pistons p4, p5, p6 dudit moteur, par l'intermédiaire de moyens de transmission 24, 25 de type roues dentées, engrenages, ou tout autre moyen équivalent, configurés de manière à ce que pour un tour dudit vilebrequin, les phases d'admission et d'échappement dudit fluide actif dans les cylindres c4, c5, c6 dudit moteur soient réalisées successivement.

Le tube tournant 20 permettant l'admission du fluide actif dans les cylindres c4, c5, c6, est lié à l'échangeur thermique C par la canalisation 12. Le tube tournant 21 permettant l'échappement du fluide actif hors des cylindres c4, c5, c6, est lié à l'éjecteur 15 par le conduit 14.

Les tubes tournants 20 et 21 comportent des orifices respectivement 200 et 210, configurés de manière à permettre la circulation du fluide actif au travers desdits tubes et assurer la synchronisation des phases d'admission et d'échappement selon la configuration des cylindres c4, c5, c6 du moteur à combustion externe B. Ces orifices 200, 201 sont percés perpendiculairement à l'axe de rotation des tubes tournants 20, 21, au droit des cylindres c4, c5, c6 correspondants.

En fonction de la position angulaire des orifices 200, 210, le fluide actif pénètre ou s'échappe des cylindres c4, c5, c6. En effet, pour un même cylindre c4, c5 ou c6, pendant la phase d'admission (figure 3a), le tube tournant 20 est disposé de sorte que ses orifices 200 autorisent le passage du fluide actif du conduit 12 vers ledit cylindre et le tube tournant 21 est disposé de sorte que ses orifices 210 bloquent le passage du fluide actif contenu dans ledit cylindre vers le conduit 14. Inversement, pendant la phase d'échappement (figure 3b), le tube tournant 20 est disposé de sorte que ses orifices 200 bloquent l'entrée du fluide actif dans le cylindre c4, c5 ou c6 et le tube tournant 21 est disposé de sorte que ses orifices 210 autorisent le passage du fluide actif contenu dans ledit cylindre vers le conduit 14.

En se rapportant aux figures 3a et 3b, les tubes tournants 20, 21 sont en contact avec des rondelles d'étanchéité 26 percées en accord avec les orifices 200, 210 desdits tubes. Les rondelles d'étanchéité 26 sont avantageusement susceptibles d'un léger déplacement assurant un contact intime avec les tubes tournants 20, 21. Pour ce faire, on peut utiliser des ressorts de compression agencés de manière à ce que les rondelles d'étanchéité 26 soient constamment plaquées contre les tubes tournants 20, 21 au niveau des orifices 200, 210.

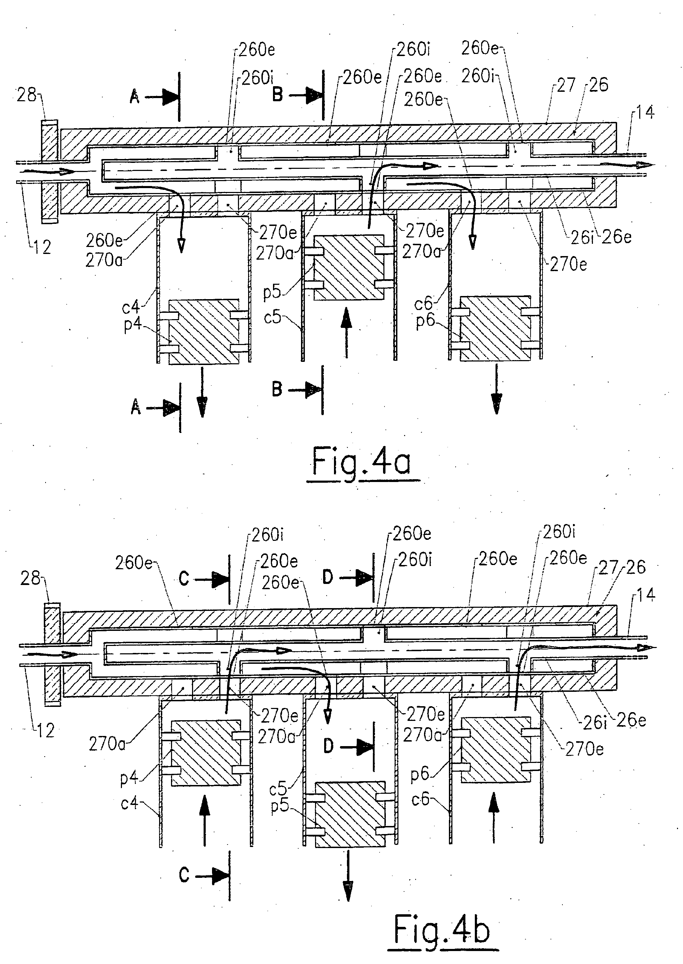

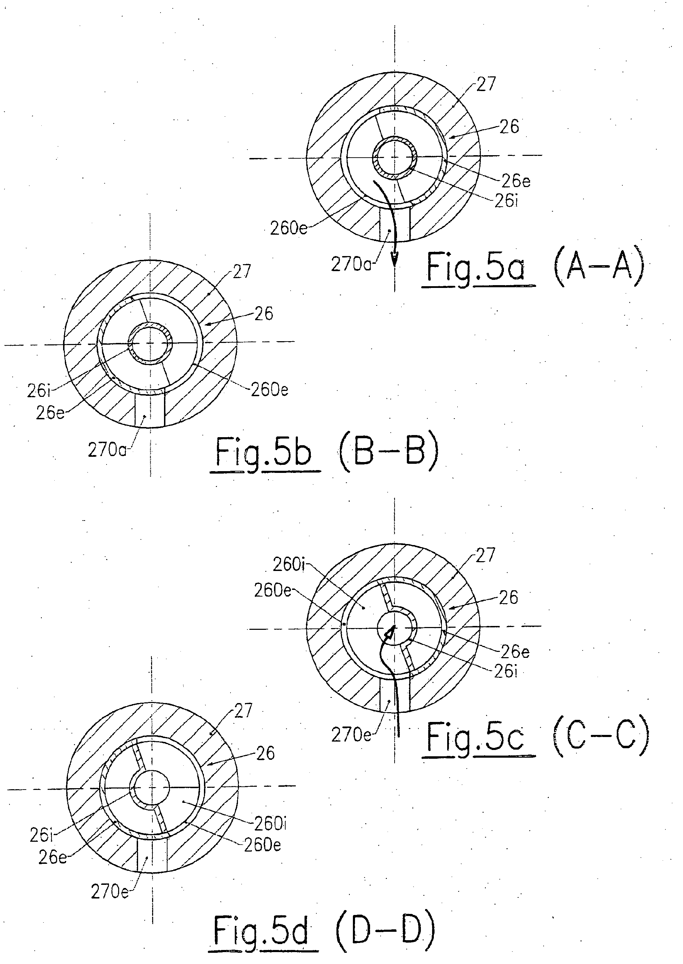

Dans une variante de réalisation représentée sur les figures 4a, 4b, 5a, 5b, 5c et 5d, le dispositif de distribution du moteur à combustion externe B est formé par un unique boisseau 26 agencé dans la culasse 27 dudit moteur. Le boisseau 26 est monté mobile en rotation autour d'un axe parallèle à l'axe de rotation du vilebrequin associé au moteur à combustion externe B.

Pour que la position du boisseau 26 soit synchronisée avec les phases du moteur à combustion externe B, ledit boisseau est entraîné en rotation par le vilebrequin relié au pistons p4, p5, p6 dudit moteur, par l'intermédiaire de moyens de transmission 28 configurés de manière à ce que pour un tour dudit vilebrequin, les phases d'admission et d'échappement du fluide actif dans les cylindres dudit moteur soient réalisées successivement.

Le boisseau 26 est configuré de manière à permettre l'admission et l'échappement du fluide actif dans les cylindres c4, c5, c6 du moteur à combustion externe B. Il est formé par un tube externe 26e à l'intérieur duquel est fixé un tube interne 26i concentrique, de diamètre plus petit. Le tube externe 26e permet l'admission du fluide actif dans les cylindres c4, c5, c6. Il est lié à l'échangeur thermique C par la canalisation 12. Le tube interne 26i permet l'échappement du fluide actif hors des cylindres c4, c5, c6. Il est lié à l'éjecteur 15 par le conduit 14.

Le tube externe 26e et le tubes interne 26i comportent des échancrures respectivement 260e et 260i, configurées de manière à permettre la circulation du fluide actif au travers desdits tubes lors de la rotation du boisseau 26. Ces échancrures 260e, 260i sont réalisées perpendiculairement à l'axe de rotation du boisseau 26, au droit des orifices de passage 270a, 270e vers les cylindres c4, c5, c6 correspondants. Les échancrures 260e et 260i ont sensiblement la même largeur que le diamètre des orifices de passages 270a, 270e.

Le tube externe 26e comporte autant d'échancrures 260e qu'il y a d'orifices de passage 270a, 270e dans la culasse 27. En se rapportant aux figures 5a à 5c, les échancrures 260e sont réalisées sur la demie-circonférence du tube externe 26e de manière à ce que pour un tour du boisseau 26, chacun des orifices de passage 270a, 270e soit alternativement ouvert (figure 5a) et fermé (figure 5b). Pour un même cylindre c4, c5 ou c6, les échancrures 260e sont décalées angulairement de sorte que lorsque les orifices d'admission 270a du fluide actif sont ouverts, les orifices d'échappement 270e sont fermés.

En se référant aux figures 4a et 4b, le tube interne 26i comporte des échancrures 260i uniquement au droit des orifices d'échappement 270e des cylindres c4, c5, c6. Les échancrures 260i sont en saillie vers l'extérieur du tube interne 26i et sont en contact avec la paroi interne du tube externe 26e. En se rapportant aux figures 5a à 5c, les échancrures 260i sont réalisées sur la demie-circonférence du tube interne 26i, directement en regard des échancrures 260e disposées au droit des orifices d'échappement 270e. De cette manière, pour un tour du boisseau 26, chacun des orifices d'échappement 270e est alternativement ouvert (figure 5c) et fermé (figure 5d).

Le tube externe 26e peut aussi servir à l'échappement du fluide actif et le tube interne 26i à l'admission dudit fluide.

Concernant le moteur à combustion interne A, les phases d'admission/compression/détente/échappement du mélange d'air et de carburant sont préférentiellement réalisées à l'aide d'un dispositif de distribution connu de l'homme du métier, du type comportant clapets, soupapes et système d'allumage.

Toutefois, le dispositif de distribution du moteur à combustion interne A peut être le même que celui du le moteur à combustion externe B, c'est-à-dire formé par deux tubes tournants ou un boisseau unique tels que décrits précédemment.

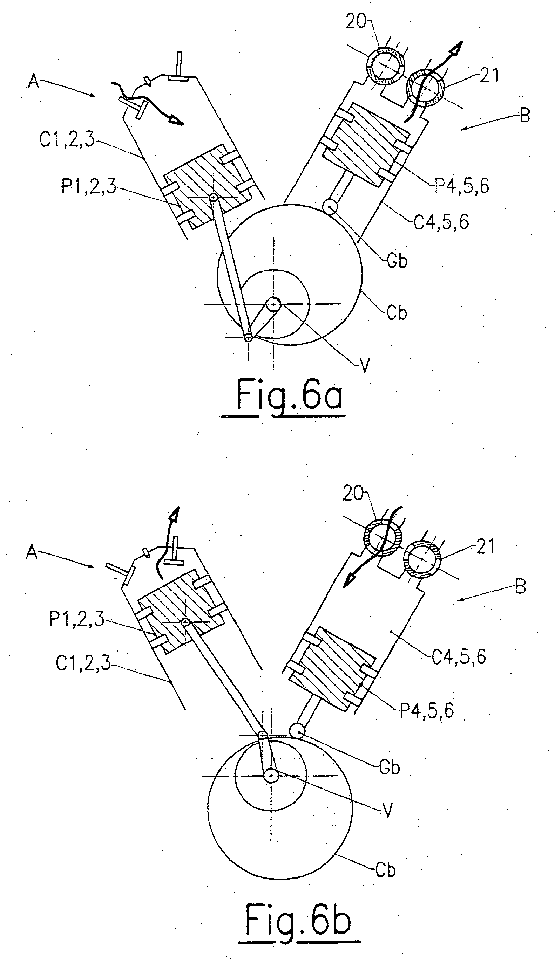

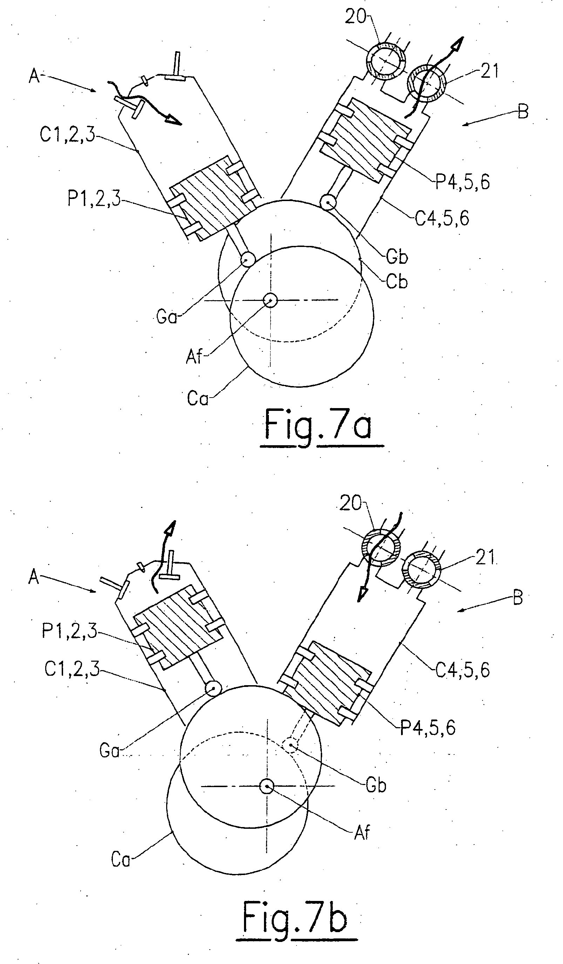

Lorsque les moteurs A et B sont utilisés pour la propulsion d'un véhicule automobile, les cylindres desdits moteurs peuvent être disposés en ligne, en 'V' (figures 6a, 6b, 7a, 7b), ou en 'U', dans un moteur de type 'V6' (2x3) ou 'V8' (2x4). Avantageusement, les cylindres c1, c2, c3 du moteur à combustion interne A forment la première branche, et les cylindres c4, c5, c6 du moteur à combustion externe B forment l'autre branche, les deux dites branches agissant sur un vilebrequin commun relié aux moyens de propulsion du véhicule. Dans un moteur de type 'V12', les cylindres formant les moteurs A et B sont montés en ligne côte à côte (3+3), dans un plan commun et de façon combinée.

À titre d'exemple, chacune des branches comporte trois cylindres « à *combustion interne* » et 3 cylindres *« à combustion externe »,* le plan de culasse commun recevant également les autres moyens connexes associés, la disposition des entités étant réalisée en 'X'.

Comme représenté sur les figures 6a, 6b ou 7a, 7b, lorsqu'il n'y a qu'un seul vilebrequin ou que les vilebrequins Va et Vb sont solidarisés, les moteurs A et B sont avantageusement agencés de manière à ce que les pistons p1, p2, p3 du moteur à combustion interne A soient en phase montante (déplacement du point mort bas vers le point mort haut) lorsque les pistons p4, p5, p6 du moteur à combustion externe B sont en phase descendante (déplacement du point mort haut vers le point mort bas). Le cycle moteur animant les pistons p1, p2, p3 du moteur à combustion interne A réalisé sur deux tours de vilebrequin forme un cycle à quatre temps, pendant que le cycle moteur animant les pistons p4, p5, p6 du moteur à combustion externe B est réalisé sur un seul tour de vilebrequin. De cette manière, l'énergie résultant de la détente du fluide actif dans les cylindres c4, c5, c6 du moteur à combustion externe B agit sur les pistons p1, p2, p3 du moteur à combustion interne A pendant les phases de compression et d'échappement.

Les pistons p1, p2, p3, p4, p5, p6 des moteurs A et B sont liés de manière classique au vilebrequin commun ou aux vilebrequins distincts Va et Vb, par des attelages mécaniques classiques de type bielles/manivelles ou par des attelages mécaniques spécifiques tels que décrits ci-dessous.

En se rapportant au mode de réalisation représentée sur les figures 6a et 6b, les pistons p1, p2, p3 du moteur à combustion interne A sont reliés au vilebrequin commun V par un système bielle/manivelle classique. Le vilebrequin V est aménagé pour recevoir des cames Cb. Ces dernières sont positionnées perpendiculairement à l'axe de rotation du vilebrequin V et sont configurées de manière à agir sur des galets Gb placés à l'intérieur des pistons p4, p5, p6 du moteur à combustion externe B, les courses desdits pistons étant liées au profil et à la position angulaire desdites cames. Les cames Cb sont en contact permanent avec les galets Gb.

La position des cames Cb est réglée de manière à ce que les pistons p1, p2, p3 du moteur à combustion interne A soient en phase montante lorsque les pistons p4, p5, p6 du moteur à combustion externe B sont en phase descendante.

L'utilisation des cames Cb permet d'optimiser le rendement de détente du fluide actif dans les cylindres c4, c5, c6 par une course allongée des pistons p4, p5, p6 du moteur à combustion externe B. Ces cames permettent également d'augmenter la vitesse d'évacuation du fluide actif hors des cylindres c4, c5, c6 par un profil adapté.

Suivant un autre mode de réalisation, formant partie de l'invention, représenté sur les figures 7a et 7b, le vilebrequin est remplacé par un arbre de force Af tournant, équipé de cames Ca et Cb du type décrit précédemment. Ces cames sont positionnées perpendiculairement à l'axe de rotation de l'arbre Af et sont configurées de manière à agir simultanément sur des galets Ga placés à l'intérieur des pistons p1, p2, p2 du moteur à combustion interne A, et des galets Gb placés à l'intérieur des pistons p4, p5, p6 du moteur à combustion externe B, les courses desdits pistons étant liées au profil et à la position angulaire desdites cames. Les cames Ca et Cb sont en contact intime permanent avec les galets Ga et Gb.

Les positions des cames Ca et Cb sont réglées de manière à ce que les pistons p1, p2, p3 du moteur à combustion interne A soient en phase montante lorsque les pistons p4, p5, p6 du moteur à combustion externe B sont en phase descendante. Cet agencement permet un déplacement chronologique des pistons combiné au cycle de distribution et un mouvement de rotation à couple constant.

En se rapportant aux figures 1 et 2, le vilebrequin Vb du moteur à combustion externe B est avantageusement relié à un arbre de force F équipé d'un premier volant de compression 2 aspirant un fluide actif par la canalisation 1. L'arbre de force F peut aussi être relié au vilebrequin Va du moteur à combustion interne A ou au vilebrequin commun aux deux moteurs A et B.

En pratique, le volant de compression 2 aspire de l'air frais extérieur, mais d'autres fluides actifs, liquides ou gazeux, convenant à l'homme du métier et dont le volume augmente sous l'effet de la chaleur, peuvent être employés.

Le fluide actif est alors conduit vers une capacité intermédiaire D successivement à travers une canalisation 3 équipée d'un filtre 4, et la canalisation 5. L'arbre de force F est également équipé d'un second volant de compression 7, lequel, par la canalisation 6, transfère le fluide actif de la capacité intermédiaire D vers un échangeur haute température C, successivement à travers la canalisation 8, l'échangeur intermédiaire 9 et la canalisation 10 éventuellement équipée d'une vanne 11.

En se rapportant aux figures 1 et 2, l'échangeur thermique C est disposé en amont du moteur à combustion externe B. Il est traversé d'une part par les gaz de combustion évacués du moteur à combustion interne A et d'autre part par le fluide actif destiné à animer les pistons p4, p5, p6 du moteur à combustion externe B, ledit échangeur étant configuré de manière à ce que lesdits gaz de combustion chauffent et mettent sous pression ledit fluide actif.

L'échangeur thermique C est formé d'un enceinte traversée par un ou plusieurs conduits d'évacuation e1 des gaz de combustion évacués du moteur à combustion interne A. L'échangeur thermique C intègre de façon intime et étanche une capacité e2 conçue de manière à emmagasiner et restituer la chaleur des gaz de combustion.

La capacité e2 est préférentiellement formée par un treillis ou une laine métallique configurés de manière à laisser le fluide actif circuler dans l'enceinte de l'échangeur thermique C tout en augmentant la surface d'échange thermique. D'autres moyens équivalents convenant à l'homme du métier peuvent être employés.

En amont de l'échangeur thermique C, le conduit d'évacuation e1 des gaz de combustion peut traverser une capacité d'accumulation et de restitution de la chaleur 43 contenant un matériau accumulant et restituant à la demande la chaleur excédentaire desdits gaz de combustion.

La capacité e2 peut être agencée avec une source d'énergie thermique extérieure destinée à augmenter la quantité de chaleur emmagasinée par ladite capacité. En se rapportant aux figures 1 et 2, la capacité e2 est par exemple reliée à un capteur solaire So via un conduit conducteur de chaleur So1. D'autres moyens équivalents permettant d'apporter à la capacité e2 une énergie thermique extérieure (par exemple par hyperfréquence) peuvent être employés par l'homme du métier.

L'échangeur thermique C peut également être associé à un dispositif d'injection de carburant 45 de manière à ce que le fluide actif traversant ledit échangeur soit mélangé à une masse de carburant, ce dernier étant destiné à s'enflammer dans ledit échangeur sous l'effet de la chaleur issue des gaz de combustion. En pratique, une masse de carburant est injectée dans l'enceinte de l'échangeur thermique C via le conduit 46 et la vanne 47.

Dans une autre variante de réalisation combinée ou non au mode de réalisation précédent, l'échangeur thermique C est associé à une capacité extérieure contenant un gaz pressurisé du type air ou azote. Cette masse additionnelle de fluide pénétrant dans l'enceinte de l'échangeur thermique C, augmente fortement son volume, et donc celui du fluide actif, au contact de la capacité e2 avant qu'il ne pénètre dans les cylindres c4, c5, c6 du moteur à combustion externe B.

Sous l'effet de la chaleur diffusée à travers la capacité e2 et/ou apportée par des dispositifs annexes, le fluide actif circulant dans l'échangeur thermique C augmente sa température et sa pression. Ainsi mis sous pression, le fluide actif pénètre, via le conduit 12, dans les cylindres c4, c5, c6 du moteur à combustion externe B et se détend pour repousser les pistons p4, p5, p6. Le débit de fluide actif pénétrant dans les cylindres c4, c5, c6 est maîtrisé par la vanne 12a équipant le conduit 12.

Au moins partiellement détendu dans les cylindres c4, c5, c6, le fluide actif est évacué vers un éjecteur 15 formant tube de venturi. L'éjecteur 15 est lié de façon étanche :
- à l'échappement du moteur à combustion externe B via la canalisation 14,
- à un volant de détente 19 solidaire de l'arbre de force F via le conduit 16, l'échangeur 17 en contact intime avec l'échangeur intermédiaire 9 et le conduit 18,
- au conduit de sortie e3 évacuant les gaz de combustion de l'échangeur thermique C.

En se rapportant aux figures 1 et 2, la canalisation 14 pénètre dans la capacité intermédiaire D de manière à former un échangeur de chaleur. En effet, une partie de la chaleur du fluide actif évacué du moteur à combustion externe B est transmise au fluide actif frais circulant dans la capacité intermédiaire D avant qu'il ne pénètre dans l'échangeur intermédiaire 9, ce qui améliore le rendement global du système. De même, l'échangeur 17 permet de préchauffer le fluide actif frais dans l'échangeur 9 avant qu'il ne pénètre dans l'échangeur thermique C.

Les gaz de combustion sortant de l'échangeur thermique C et/ou le fluide actif évacué du moteur à combustion externe B sont ensuite canalisés, via l'injecteur 15 et le conduit 16, vers le volant de détente commun 19 libérant leur énergie résiduelle, avant leur diffusion dans l'atmosphère via le conduit 19a. Le volant de détente est relié au vilebrequin commun aux deux moteurs A et B ou à un des vilebrequins spécifiques Va ou Vb. Cette caractéristique permet de récupérer non seulement l'énergie thermique des gaz de combustion mais également une partie de leur énergie latente résiduelle.

De la même manière, on peut également prévoir d'utiliser un volant de détente spécifique aux gaz de combustion sortant de l'échangeur thermique C et un volant de détente spécifique au fluide actif évacué du moteur à combustion externe B.

Une vanne e4 équipe le conduit de sortie e3 et assure à la demande la distribution des gaz de combustion vers l'injecteur 15 et/ou vers un conduit e5 relié au conduit 12. Cette configuration permet de combiner une partie des gaz de combustion au fluide actif animant les pistons p4, p5, p6 du moteur à combustion externe B. Préférentiellement, le conduit e5 est équipé d'un éjecteur e8 permettant d'augmenter la vitesse des gaz de combustion lorsqu'ils sont injectés dans le conduit 12. La vitesse du fluide actif est alors de ce fait augmentée avant de pénétrer dans les cylindres c4, c5, c6 du moteur à combustion externe B, ce qui accroît les efforts appliqués sur les pistons p4, p5, p6.

Suivant un mode général de réalisation, le moteur à combustion interne A et le moteur à combustion externe B comportent une boucle de refroidissement R commune formée d'une capacité 29 contournant, en les enveloppant, les chemises des cylindres c1, c2, c3, c4, c5, c6. Un fluide de refroidissement circule en circuit fermé dans une canalisation 31 liant la capacité 29 à un échangeur refroidisseur 32, sous l'effet d'une pompe 30. L'échangeur refroidisseur 32 est du type à ailettes et peut éventuellement être ventilé par les gaz de combustion et le fluide actif refroidis et diffusés dans l'atmosphère via le conduit 19a.

Dans la variante de réalisation représentée sur la figure 2, lorsque le fluide actif est de l'air, une masse maîtrisée de vapeur d'eau est avantageusement mélangée à cet air avant d'être chauffé et mis sous pression par les gaz de combustion et notamment avant de pénétrer dans l'échangeur thermique C. La vapeur d'eau humidifie le fluide actif et permet une absorption maximale de la chaleur issue des gaz de combustion traversant l'échangeur thermique C.

Une pompe 49 équipe une canalisation 48 reliant l'échangeur intermédiaire 9 à un conteneur d'eau 50. La canalisation 48 peut également comporter un détendeur. En fonctionnement, sous l'action de la pompe 49, une quantité d'eau est prélevée dans le conteneur 50 et injectée dans l'échangeur intermédiaire 9 où elle s'évapore en absorbant la chaleur issue de l'échangeur 17. Ainsi, l'air circulant dans l'échangeur 9 se charge en humidité et voit sa pression augmentée. Toutefois, d'autres moyens équivalents permettant d'humidifier l'air en amont de l'échangeur thermique C peuvent être employés.

En sortant de l'échangeur 9, l'air humidifié est conduit dans l'échangeur thermique C via le conduit 10. L'air humidifié se vaporise ensuite dans l'échangeur thermique C en élevant sa pression au contact de la capacité e2 en absorbant la chaleur issue de celle. Ainsi mis sous pression, l'air humidifié pénètre, via le conduit 12, dans les cylindres c4, c5, c6 du moteur à combustion externe B et se détend pour repousser les pistons p4, p5, p6.

Au moins partiellement détendu en sortie du moteur à combustion externe B, l'air humidifié est canalisé par le conduit 14 équipé d'une vanne de régulation 14a un refroidisseur 52a contenu de manière étanche dans une enceinte close 52. Ces composants constituent la capacité D1. La condensation est activée par l'air frais circulant de manière forcée autour du refroidisseur 52a, par l'intermédiaire du premier volant de compression 2 et des conduits 3 et 5.

Une partie de la chaleur de l'air humidifié évacué du moteur à combustion externe B est transmise à l'air frais circulant dans la capacité D1 avant qu'il ne pénètre dans l'échangeur intermédiaire 9, ce qui améliore le rendement global du système.

Le refroidisseur 52a est équipé d'un tube 53 qui le pénètre pour partie et le prolonge de manière à former un séparateur gaz/vapeur traversant la paroi supérieure de la capacité D1. Le tube séparateur 53 est relié à l'éjecteur 15, par le conduit 54 équipé du détendeur 55 et d'un évaporateur 56. Le tube séparateur 53 est muni d'orifices dans sa partie basse permettant le passage de la vapeur condensée qui s'accumule dans le refroidisseur 52a. Cette vapeur condensée est ensuite évacuée vers le conteneur d'eau 50, via le conduit 58 éventuellement équipé d'un échangeur 59 permettant d'achever la condensation.

Le fluide gazeux issu du séparateur 53, au moins partiellement libéré de sa vapeur, est détendu dans l'évaporateur 56, et rejoint le conduit 16. Les gaz de combustion et le fluide gazeux sont ensuite canalisés vers l'échangeur 17 en contact intime avec l'échangeur intermédiaire 9, le conduit 18 et le volant de détente commun 19 libérant leur énergie résiduelle, avant leur diffusion dans l'atmosphère via le conduit 19a.

En se rapportant au mode de réalisation représenté sur la figure 2, le conteneur d'eau 50 est relié à un refroidisseur 63 en contact intime avec le circuit de refroidissement R, via la canalisation 60 équipée de la pompe 61 et du détendeur 62. Un conduit 64 relie également le refroidisseur 63 à la capacité D1. Une masse d'eau maîtrisée issue de la capacité 50 est mise en pression par la pompe 61 et mise en circulation dans le refroidisseur 63. Cette masse d'eau prélève pour partie la chaleur issue du fluide de refroidissement contournant les cylindres c1, c2, c3, c4, c5, c6 des moteurs A et B.

Selon la quantité de chaleur prélevée au fluide de refroidissement, la masse d'eau en circulation dans le refroidisseur 63 peut s'évaporer en partie. La vapeur ainsi formée est alors dirigée par le conduit 64 dans la capacité D1 et humidifie l'air frais circulant de manière forcée dans ladite capacité D1 sous l'effet du volant 2. La solution humide ainsi formée est alors mise en pression par le volant 7 et conduite dans l'échangeur thermique C, successivement à travers les conduits 6 et 8, l'échangeur 9 et la canalisation 10.

De façon générale, le système hybride motorisé peut être mis en fonctionnement de façon autonome, sans l'aide d'un démarreur ni de batterie électrique - composants massifs et onéreux - par de l'air comprimé stocké dans une capacité connexe 13. Cette dernière peut être alimentée pendant le fonctionnement du système hybride, par l'intermédiaire d'un compresseur (non représenté) monté sur l'arbre de force F, lié à un vilebrequin commun aux moteurs A et B ou au vilebrequin Va ou Vb de l'un des deux dits moteurs. Ce compresseur aspire l'air atmosphérique pour le comprimer dans la capacité 13, la distribution de l'air comprimé dans le moteur à combustion externe B étant réalisée à la demande par l'intermédiaire d'une vanne de commande 13a apte à mettre en communication ladite capacité 13 et le conduit 12.

Quel que soit le mode de réalisation, les éléments constitutifs du système hybride motorisé seront avantageusement positionnés au plus près des moteurs A et B, de manière à minimiser les pertes de chaleur.

## Revendications

1. Système hybride motorisé avec pistons et volants, comportant en combinaison deux cycles moteurs complémentaires en terme de technologie et de température, l'un formant un moteur à combustion interne (A) à au moins trois cylindres (c1, c2, c3), avec pistons (p1, p2, p3), l'autre formant un moteur dit à combustion externe (B) à au moins trois cylindres (c4, c5, c6) avec pistons (p4, p5, p6) animés par la détente d'un fluide actif, ledit système hybride motorisé étant formé de la sorte d'au moins trois couples cylindres/pistons, étant précisé que le moteur à combustion interne (A) fonctionne suivant un cycle à 4 temps alors que le moteur à combustion externe (B) fonctionne suivant un cycle à 2 temps, les pistons (p1, p2, p3) du moteur à combustion interne (A) et les au moins trois pistons (p4, p5, p6) du moteur à combustion externe (B) étant agencés de manière a ce que l'énergie résultant de la détente successive du fluide actif dans les au moins trois cylindres (c4, c5, c6) dudit moteur à combustion externe (B) agissent successivement sur lesdits pistons dudit moteur à combustion interne à quatre temps (A) pendant les phases de compression et d'échappement,
**se caractérisant par le fait que** les pistons (p1, p2, p3) du moteur à combustion interne (A) et les pistons (p4, p5, p6) du moteur à combustion externe (B) sont agencés avec un arbre de force (Af) tournant, ledit arbre étant équipé de cames (Ca, Cb) configurées de manière à agir simultanément sur des galets (Ga) placés à l'intérieur desdits pistons dudit moteur à combustion interne, et des galets (Gb) placés à l'intérieur desdits pistons dudit moteur à combustion externe, les courses desdits pistons étant liées au profil et à la position angulaire desdites cames.

2. Système hybride suivant la revendication 1 **caractérisé en ce que** les cames (Ca, Cb) sont en contact intime permanent avec les galets (Ga, Gb).

3. Système hybride suivant la revendication 1 **caractérisé en ce que** les au moins trois pistons (p1, p2, p3) du moteur à combustion interne (A) sont successivement en phase montante - déplacement du point mort bas vers le point mort haut - lorsque les au moins trois pistons (p4, p5, p6) du moteur à combustion externe (B) combinés auxdits pistons (p1, p2, p3) du moteur à combustion interne (A) sont successivement en phase descendante - déplacement du point mort haut vers le point mort bas-.

4. Système hybride selon la revendication 1, dans lequel les positions des cames (Ca, Cb) sont réglées de manière à ce que les pistons (p1, p2, p3) du moteur à combustion interne (A) soient en phase montante lorsque les pistons (p4, p5, p6) du moteur à combustion externe (B) sont en phase descendante.

5. Véhicule automobile **se caractérisant par le fait qu'**il intègre le système hybride conforme aux revendications précédentes.

## Patentansprüche

1. Motorisiertes Hybridsystem mit Kolben und Schwungrädern, das in Kombination zwei bezüglich der Technologie und der Temperatur komplementäre Motorzyklen aufweist, von denen der eine einen Motor mit innerer Verbrennung (A) mit mindestens drei Zylindern (c1, c2, c3) mit Kolben (p1, p2, p3) bildet, der andere einen Motor mit äußerer Verbrennung (B) mit mindestens drei Zylindern (c4, c5, c6) mit Kolben (p4, p5, p6) bildet, die durch die Expansion eines aktiven Fluids angetrieben werden, wobei das motorisierte Hybridsystem auf diese Weise von mindestens drei Zylinder/Kolben-Paaren gebildet wird, wobei der Motor mit innerer Verbrennung (A) gemäß einem 4-Takt-Zyklus arbeitet, während der Motor mit äußerer Verbrennung (B) gemäß einem 2-Takt-Zyklus arbeitet, wobei die Kolben (p1, p2, p3) des Motors mit innerer Verbrennung (A) und die mindestens drei Kolben (p4, p5, p6) des Motors mit äußerer Verbrennung (B) so gestaltet sind, dass die aus der aufeinanderfolgenden Expansion des aktiven Fluids in den mindestens drei Zylindern (c4, c5, c6) des Motors mit äußerer Verbrennung (B) resultierende Energie nacheinander auf die Kolben des 4-Takt-Motors mit innerer Verbrennung (A) während der Verdichtungs- und Ausstoßphasen einwirkt,
**dadurch gekennzeichnet, dass** die Kolben (p1, p2, p3) des Motors mit innerer Verbrennung (A) und die Kolben (p4, p5, p6) des Motors mit äußerer Verbrennung (B) mit einer drehenden Kraftwelle (Af) gestaltet sind, wobei die Welle mit Nocken (Ca, Cb) ausgestattet ist, die so konfiguriert sind, dass sie gleichzeitig auf Rollen (Ga), die innerhalb der Kolben des Motors mit innerer Verbrennung angeordnet sind, und auf Rollen (Gb) einwirken, die innerhalb der Kolben des Motors mit äußerer Verbrennung angeordnet sind, wobei die Hubstrecken der Kolben mit dem Profil und der Winkelstellung der Nocken verbunden sind.

2. Hybridsystem nach Anspruch 1, **dadurch gekennzeichnet, dass** die Nocken (Ca, Cb) mit den Rollen (Ga, Gb) in durchgehendem engem Kontakt stehen.

3. Hybridsystem nach Anspruch 1, **dadurch gekennzeichnet, dass** die mindestens drei Kolben (p1, p2, p3) des Motors mit innerer Verbrennung (A) nacheinander in der Aufwärtsphase - Verschiebung vom unteren Totpunkt zum oberen Totpunkt - sind, wenn die mit den Kolben (p1, p2, p3) des Motors mit innerer Verbrennung (A) kombinierten mindestens drei Kolben (p4, p5, p6) des Motors mit äußerer Verbrennung (B) nacheinander in der Abwärtsphase - Verschiebung vom oberen Totpunkt zum unteren Totpunkt - sind.

4. Hybridsystem nach Anspruch 1, wobei die Stellungen der Nocken (Ca, Cb) so geregelt werden, dass die Kolben (p1, p2, p3) des Motors mit innerer Verbrennung (A) in der Aufwärtsphase sind, wenn die Kolben (p4, p5, p6) des Motors mit äußerer Verbrennung (B) in der Abwärtsphase sind.

5. Kraftfahrzeug, **dadurch gekennzeichnet, dass** es das Hybridsystem nach den vorhergehenden Ansprüchen umfasst.

## Claims

1. Motorized hybrid system with pistons and flywheels, comprising in combination two engine cycles which are complementary in terms of technology and temperature, one forming an internal combustion engine (A) having at least three cylinders (c1, c2, c3) with pistons (p1, p2, p3), the other forming a so-called external combustion engine (B) having at least three cylinders (c4, c5, c6) with pistons (p4, p5, p6) driven by the expansion of an active fluid, the said motorized hybrid system being formed so as to include at least three cylinder/piston pairs, it being specified that the internal combustion engine (A) operates according to a 4-stroke cycle while the external combustion engine (B) operates according to a 2-stroke cycle, the pistons (p1, p2, p3) of the internal combustion engine (A) and the at least three pistons (p4, p5, p6) of the external combustion engine (B) being arranged such that the energy resulting from the successive expansion of the active fluid in the at least three cylinders (c4, c5, c6) of the said external combustion engine (B) acts successively on the said pistons of the said four-stroke internal combustion engine (A) during the compression and exhaust phases, **characterized in that** the pistons (p1, p2, p3) of the internal combustion engine (A) and the pistons (p4, p5, p6) of the external combustion engine (B) are arranged with a rotating force shaft (Af), the said shaft being equipped with cams (Ca, Cb) configured so as to act simultaneously on rollers (Ga) placed inside the said pistons of the said internal combustion engine, and rollers (Gb) placed inside the said pistons of the said external combustion engine, the travels of the said pistons being associated with the profile and with the angular position of the said cams.

2. Hybrid system according to Claim 1, **characterized in that** the cams (Ca, Cb) are in permanent intimate contact with the rollers (Ga, Gb).

3. Hybrid system according to Claim 1, **characterized in that** the at least three pistons (p1, p2, p3) of the internal combustion engine (A) are successively in the ascending phase - movement from the bottom dead centre towards the top dead centre - when the at least three pistons (p4, p5, p6) of the external combustion engine (B) combined with the said pistons (p1, p2, p3) of the internal combustion engine (A) are successively in the descending phase - movement from the top dead centre towards the bottom dead centre.

4. Hybrid system according to Claim 1, in which the positions of the cams (Ca, Cb) are regulated in such a way that the pistons (p1, p2, p3) of the internal combustion engine (A) are in the ascending phase when the pistons (p4, p5, p6) of the external combustion engine (B) are in the descending phase.

5. Motor vehicle **characterized in that** it incorporates the hybrid system according to the preceding claims.
